# EUROPÄISCHE PATENTSCHRIFT

(11) **EP 0 923 286 B1**
(45) Veröffentlichungstag und Bekanntmachung des Hinweises auf die Patenterteilung: **30.10.2002**
(21) Anmeldenummer: 97936683.8
(22) Anmeldetag: 05.08.1997
(51) Int. Cl.: A01N 37/46

(54) **FLÜSSIGE FORMULIERUNG VON ETHYL-(Z)-2-CHLOR-3- 2-CHLOR-5-(4,5,6,7-TETRAHYDRO-1,3-DIOXOISOINDOLDION-2-YL)PHENYL]ACRYLAT**
LIQUID FORMULATION OF ETHYL-(Z)-2-CHLORO-3-2-CHLORO-5-(4,5,6,7-TETRAHYDRO-1,3-DIOXOISOINDOLDION-2-YL)PHENYLACRYLATE
FORMULATION LIQUIDE D'ETHYL-(Z)-2-CHLORO-3- 2-CHLORO-5-(4,5,6,7-TETRAHYDRO-1,3-DIOXYISOINDOLDION-2-YL)PHENYL]ACRYLATE

(30) Priorität: 19.08.1996 DE 19633271
(43) Veröffentlichungstag der Anmeldung: 23.06.1999
(73) Patentinhaber: BASF AKTIENGESELLSCHAFT, 67056 Ludwigshafen (DE)
(72) Erfinder: BERGHAUS, Rainer, D-67346 Speyer (DE); KLEUSER, Dieter, D-67227 Frankenthal (DE); BRATZ, Matthias, D-67117 Limburgerhof (DE); PARG, Adolf, D-67098 Bad Dürkheim (DE); NUYKEN, Wessel, D-67166 Otterstadt (DE)
(86) Internationale Anmeldenummer: EP9704253
(87) Internationale Veröffentlichungsnummer: WO98007319

(56) Entgegenhaltungen:
- EP-A- 0 385 231
- EP-A- 0 400 585
- EP-A- 0 413 267
- DE-A- 3 603 789
- US-A- 3 442 818

## Beschreibung

Die vorliegende Erfindung betrifft eine flüssige Formulierung von Ethyl-(Z)-2-chlor-3-[2-chlor-5-(1,3-dioxo 4,5,6,7-tetrahydro-isoindol-2-yl)phenyl]acrylat, enthaltend im wesentlichen neben diesem Pflanzenschutz-Wirkstoff
a) einen ionischen Emulgator,
b) einen nicht-ionischen Emulgator,
c) ein nicht-nucleophiles und nicht-basisches aromatisches Lösungsmittel und
d) gewünschtenfalls einen weiteren herbiziden Pflanzenschutzwirkstoff.

Weiterhin betrifft die vorliegende Erfindung ein Verfahren zur Bekämpfung von unerwünschten Pflanzenwuchs mit dieser Formulierung.

Aus EP-A 240 659 ist der Wirkstoff Ethyl-(Z)-2-chlor-3-[2-chlor-5-(1,3-dioxo 4,5,6,7-tetrahydro-isoindol-2-yl) phenyl]acrylat bekannt, für den als common name "Cinidon-ethyl" vorgeschlagen wurde. Ferner macht diese Druckschrift deutlich, daß der Wirkstoff unter Gewächshausbedingungen gegen eine Reihe von dikotylen Unkräutern wirksam ist. Insbesondere unter Freilandbedingungen können die bekannten Formulierungen dieses Wirkstoffs jedoch nicht völlig befriedigen.

Aus Agric. Biol. Chem. 55 (11), Seiten 2677-2681 (1991) ist bekannt, daß Pflanzenschutzwirkstoffe aus der Klasse der N-Aryl-3,4,5,6-tetrahydrophthalimide, wie das in Rede stehende Cinidon-ethyl, in der Pflanze hydrolysieren können.

Der vorliegenden Erfindung lag daher eine Formulierung für Ethyl-(Z)-2-chlor-3-[2-chlor-5-(1,3-dioxo 4,5,6,7-tetrahydro-isoindol-2-yl)phenyl]acrylat als Aufgabe zugrunde, in welcher dieser Pflanzenschutz-Wirkstoff eine bessere biologische Wirkung bei hoher Stabilität hat.

Demgemäß wurde die oben genannte flüssige Formulierung gefunden. Außerdem wurde ein Verfahren zur Bekämpfung von unerwünschtem Pflanzenwuchs gefunden, welches von dieser flüssigen Formulierung Gebrauch macht.

Ethyl- (Z)-2-chlor-3-[2-chlor-5-(1,3-dioxo 4,5,6,7-tetrahydro-isoindol-2-yl)phenyl]acrylat wird bei der Herstellung der erfindungsgemäßen Formulierung üblicherweise in einer Reinheit von 80 bis 100 % eingesetzt.

Der Anteil dieses Pflanzenschutz-Wirkstoffes an der erfindungsgemäßen flüssigen Formulierung liegt normalerweise bei 5 bis 50 Gew.-%, insbesondere 10 bis 30 Gew.-%.

Als ionische Emulgatoren eignen sich besonders anionische Tenside, z.B. Alkali-, Erdalkali- oder Ammoniumsalze der Fettsäuren wie Kaliumstearat, Alkylsulfate, Alkylethersulfate, Alkyl- oder iso-Alkylsulfonate, Alkylbenzolsulfonate wie Na-Dodecylbenzolsulfonat und Ca-Dodecylbenzolsulfonat, Alkylnaphthalinsulfonate, Alkylmethylestersulfonate, Acylglutamate, Alkylbernsteinsäureestersulfonate, Sarkosinate wie Natriumlauroylsarkosinat und Taurate. Auch Mischungen mehrerer ionischer Emulgatoren kommen in Betracht.

Bevorzugte ionische Emulgatoren sind die Salze der Alkylbenzolsulfonate und der Alkylsulfosuccinate. Besonders bevorzugte ionische Emulgatoren sind die Salze von Alkylbenzolsulfonsäuren, vor allem das Calciumsalz von Dodecylbenzolsulfonsäure und das Natriumsalz von Dioctylsulfosuccinat, insbesondere das Caiciumsalz von Dodecylbenzolsulfonsäure.

Üblicherweise beträgt der Anteil an ionischen Emulgatoren 2 bis 20 Gew.-% der flüssigen Formulierung.

Als nicht-ionische Emulgatoren eignen sich z.B. alkoxylierte tierische oder pflanzliche Fette und Öle wie Maisölethoxylate. Rizinusölethoxylate, Talgfettethoxylate, Glycerinester wie Glycerinmonostearat, Fettalkoholalkoxylate und Oxoalkoholalkoxylate, Fettsäurealkoxylate wie Ölsäureethoxylate, Alkylphenolalkoxylate wie Isononyl- Isooctyl-, Tributyl-, Tristearyl-Phenolethoxylate, Fettaminalkoxylate, Fettsäureamidalkoxylate, Zuckertenside wie Sorbitanfettsäureester (Sorbitanmonooleat, Sorbitantristearat), Polyoxyethylensorbitanfettsäureester, Alkylpolyglycoside, N-Alkylgluconamide, Alkylmethylsulfoxide, Alkyldimethylphosphinoxide wie Tetradecyldimethylphosphinoxid, sowie Mischungen derartiger nicht-ionischer Emulgatoren.

Bevorzugte nicht-ionische Emulgatoren sind ethoxylierte oder propoxylierte natürlich vorkommende Carbonsäuren oder Alkohole, vor allem ethoxylierte Öle wie Rizinusölethoxylat mit 36 bis 50 Ethylenoxideinheiten.

Der Anteil an nicht-ionischen Emulgatoren in der flüssigen Formulierung liegt normalerweise bei 2 bis 20 Gew.-%.

Geeignete nicht-nucleophile und nicht-basische aromatische Lösungsmittel sind Cyclohexanon, Halogenbenzole wie Chlorbenzol und flüssige Dichlorbenzole sowie Brombenzol, Alkylaromaten, vorzugsweise Alkylbenzole und Alkylnaphthaline, deren Alkylgruppen 1 bis 20 wie die Solvesso®-Marken, z.B. Solvesso® 100, Solvesso® 150 und Solvesso® 200 (Fa. Exxon Chemical) sowie deren Gemische und Methylbenzole: Toluol, o-Xylol, m-Xylol, p-Xylol; Ethylbenzol; Isopropylbenzol; tert.-Butylbenzol.

Es eignen sich auch Gemische der vorstehend genannten Lösungsmittel.

Bevorzugte nicht-nucleophile und nicht-basische aromatische Lösungsmittel sind Shellsol®-Marken (Deutsche Shell Chemie GmbH) oder Solvesso®-Marken: Solvesso® 100, Solvesso® 150, Solvesso® 200, insbesondere Solvesso® 200.

Der Anteil des Lösungsmittels an der flüssigen Formulierung ist in der Regel so zu bemessen, daß die Summe aller Komponenten 100 Gew.-% ergibt.

Die erfindungsgemäßen flüssigen Formulierungen können noch weitere im Pflanzenschutz gebräuchliche Wirkstoffe, z.B. andere herbizide, fungizide, insektizide oder wachstumsregulatorisch wirksame Wirkstoffe enthalten.

Bevorzugt sind als weitere im Pflanzenschutz gebräuchliche Wirkstoffe herbizide Pflanzenschutz-Wirkstoffe aus folgender Gruppe: 2-Chlor-3-[2-chlor-4-fluor-5-(4-difluormethyl-4,5-dihydro-3-methyl-5-oxo-1H-1,2,4-triazol-1-yl)phenyl]propionsäureethylester (F8426), Diflufenzopyr, Dimethenamid, Flamprop-methyl, Propanil, Aryloxyalkancarbonsäuren und deren Ester wie 2,4-D, 2,4-DB, Dichlorprop, Dichlorprop-P (2,4-DP-P), MCPA, MCPB, Mecoprop, Mecoprop-P und [(4-Amino-3,5-dichlor-6-fluor-2-pyridyl)oxy]essigsäure (Fluroxypyr), Benzoesäuren wie Chloramben, Dicamba, Benzothiadiazinone wie Bentazon, Bleacher wie Clomazone (Dimethazone), Diflufenican, Fluorochloridone, Flupoxam, Fluridone, Pyrazolate, Sulcotrione (Chlormesulone), Carbamate wie Carbetamid, Chlorbufam, Chlorpropham, Desmedipham, Phenmedipham, Vernolate, Chinolinsäuren wie Quinclorac, Quinmerac, Dinitroaniline wie Butralin, Fluchloralin, Isopropalin, Nitralin, Oryzalin, Pendimethalin, Prodiamine, Profluralin, Trifluralin, Dinitrophenole wie Bromofenoxim, Dinoseb, Dinoseb-acetat, Dinoterb, DNOC, Minoterb-Acetat, Diphenylether wie Acifluorfen-sodium, Aclonifen, Bifenox, Chlornitrofen (CNP), Difenoxuron, Ethoxyfen, Fluorodifen, Fluoroglycofen-ethyl, Fomesafen, Furyloxyfen, Lactofen, Nitrofen, Nitrofluorfen, Oxyfluorfen, Phenole wie Bromoxynil, Ioxynil, Phenoxyphenoxypropionsäureester wie Clodinafop, Cyhalofop-butyl, Diclofop-methyl, Fenoxaprop-ethyl, Fenoxapropp-ethyl, Fenthiapropethyl, Fluazifop-butyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl, Quizalofop-tefuryl, Pyridazine wie Chloridazon, Maleic hydrazide, Norflurazon, Pyridate, Pyridincarbonsäuren wie Clopyralid, Dithiopyr, Picloram, Thiazopyr, Uracile wie Bromacil, Lenacil, Terbacil sowie Pflanzenschutz-Wirkstoffe vom Cyclohexenon-Typ wie Sethoxydim, Cycloxydim, Clethodim, Tralkoxydim, Butroxydim, 2-(1-(3-Chlorallyloxy)-iminopropyl)-5-(tetrahydropyran-4-yl)-3-hydroxy-cyclohex-2-enon und 2-(1-(2-p-Chlorphenoxypropyloxy)-iminobutyl-5-(tetrahydrothiopyran-3-yl)-3-hydroxy-cyclohex-2-enon.

Besonders bevorzugt sind als weitere im Pflanzenschutz gebräuchliche Wirkstoffe herbizide Pflanzenschutz-Wirkstoffe aus folgender Gruppe: 2-Chlor-3-[2-chlor-4-fluor-5-(4-difluormethyl-4,5-dihydro-3-methyl-5-oxo-1H-1,2,4-triazol-1-yl)phenyl]propionsäureethylester (F8426), Dimethenamid, Dinitroaniline wie Pendimethalin, Pflanzenschutz-Wirkstoffe vom Cyclohexenon-Typ wie Sethoxydim, Cycloxydim, Clethodim, Tralkoxydim, Butroxydim, 2-(1-(3-Chlorallyloxy)-iminopropyl)-5-(tetrahydropyran-4-yl)-3-hydroxy-cyclohex-2-enon und 2-(1-(2-p-Chlorphenoxypropyloxy)-iminobutyl-5-(tetrahydrothiopyran-3-yl)-3-hydroxycyclohex-2-enon, ferner Aryloxyalkancarbonsäuren wie 2,4-D, 2,4-DB, CMPP, CMPP-P, Dichlorprop, Dichlorprop-P, MCPA, MCPB, die Ester dieser Verbindungen, insbesondere die Isopropyl-, Butylund Isooctylester, vor allem die 2-Ethylhexylester, sowie [(4-Amino-3,5-dichlor-6-fluor-2-pyridyl)oxy]essigsäure (Fluroxypyr).

Ganz besonders bevorzugte Mischungspartner d) sind F8426, Dimethenamin, Pendimethalin, der Isooctylester von 2,4-D und Fluoroxypyr. Der Anteil dieser weiteren Wirkstoffe liegt normalerweise bei 0 bis 80 und vorzugsweise bei 10 bis 70 Gew.-%, bezogen auf das Gewicht der fertigen Formulierung.

Die erfindungsgemäßen flüssigen Formulierungen können darüber hinaus weiterhin übliche Zusatzstoffe wie Entschäumer und Kosolventien usw. enthalten.

Als Entschäumer eignen sich beispielsweise aliphatische oder aromatische Monoalkohole mit 4 bis 14, vorzugsweise 6 bis 10 Kohlenstoffatomen wie n-Octanol oder n-Decanol oder Silicontenside.

Der Anteil der Entschäumer in der Formulierung liegt normalerweise bei 0 bis 10 und vor allem bei 0,01 bis 1 Gew.-%.

Geeignete Kosolventien sind insbesondere Mineralöle, natürlich vorkommende Öle wie Rapsöl, Sojaöl und die Methylester der diesen Ölen zugrundeliegenden Carbonsäuren wie Methyloleat und Rapsölmethylester, Fettsäureester, vor allem mit C₁-C₄-Alkanolen.

Die Herstellung der erfindungsgemäßen flüssigen Formulierung erfolgt in an sich bekannter Weise durch Vermischen der Bestandteile, gegebenenfalls unter Rühren und/oder Erwärmen.

Die so erhältlichen Produkte sind normalerweise homogene emulgierbare Konzentrate.

Als Behältnisse für die Formulierungen eignen sich jegliche üblicherweise im Pflanzenschutzmittel verwendeten Behältnisse, vor allem Flaschen, Kanister und aus chemikalienbeständigen Kunststoffen hergestellte Beutel. Besonders vorteilhaft ist der Gebrauch von wasserlöslichen Behältnissen und hierunter vor allem von wasserlöslichen Folienbeuteln, insbesondere auf Basis von Polyvinylalkohol.

Die Ausbringung derartiger Spritzbrühen zur Bekämpfung von unerwünschtem Pflanzenwuchs, bei der man sie auf die Kulturpflanze, deren Lebensraum und/oder deren Saatgut einwirken läßt, ist dem Fachmann hinreichend geläufig, so daß sich weitere Ausführungen hierzu erübrigen.

Es wurde gefunden, daß Cinidon-ethyl in den erfindungsgemäßen flüssigen Formulierungen erheblich stabiler ist, wenn keine basischen Stoffe anwesend sind.

### Beispiele

### Herstellbeispiel 1

200 g Cinidon-Ethyl, 40 g des Calciumsalzes von Dodecylbenzolsulfonat (z.B. Wettol® EM 1, Firma BASF AG), 60 g eines mit 48 Mol Ethylenoxid umgesetzten Ricinusölethoxylats (z.B. Wettol® EM 31, Firma BASF AG) wurden in ca. 740 ml Solvesso® 200 (Firma Exxon Chemical) unter Rühren gemischt, so daß ein Emulsionskonzentrat mit 200 g/l Wirkstoff entstand.

Es wurde ermittelt, auf welchen Wert (%) der Gehalt an Cinidon-ethyl der so erhaltenen Formulierung über den Zeitraum von 1 bzw. 2 Jahren bei verschiedenen Lagertemperaturen abfiel. Tabelle 1 zeigt die Mittelwerte aus jeweils 24 Lagerversuchen.

| Lagerzeit | 20 °C | 30 °C | 40 °C | 50 °C |
|---|---|---|---|---|
| 1 Jahr | 99,6 | 99,2 | 98,9 | 98,2 |
| 2 Jahre | 98,7 | 98,1 | 97,5 | 95,4 |

### Herstellbeispiel 2 (Vergleichsbeispiel)

50 Gew.-% Cinidon-Ethyl, 10 Gew.-% eines Phenylsulfonsäure-Formaldehyd-Kondensat (z.B. Wettol® D1, Firma BASF AG), 3 Gew.-% eines Kondensationsproduktes aus Phenol, Formaldehyd und Natriumsulfit (z.B. Wettol® SSP, Firma BASF AG), 5 Gew.-% Dialkylnaphthalinsulfonsäure-Natriumsalz (z.B. Wettol® NT 1, Firma BASF AG), 10 Gew.-% hochdisperse Kieselsäure (z.B. Sipernat® 22, Firma Degussa) und 22 Gew.-% Kaolin wurden inniglich vermischt, zweimal mittels einer Stiftmühle vermahlen und abermals gemischt. Man erhielt ein Spritzpulver mit guten Benetzungseigenschaften und ausreichener Suspensionsstabilität.

### Herstellbeispiel 3

50 g/l Cinidon-Ethyl. 420 g/l des Isooctylesters von 2,4-D, 50 g/l Wettol® EM 1 und 50 g/l Wettol® EM 31 wurden in Solvesso® 200 (Fa. Exxon Chemical) zu einem homogenen Emulsionskonzentrat gemischt.

### Anwendungsbeispiele

Bei einer Frühjahrsbehandlung in Getreide wurden die erfindungsgemäße Formulierung aus Herstellbeispiel 1 mit der Vergleichsformulierung (Herstellbeispiel 2) verglichen. Hierzu wurde in Kleinparzellenversuchen (Größe der Parzelle: 10 m²) bei einem Pflanzenstadium der Kulturpflanzen von 21-29 die angegebene Menge des Herbizids mittels eines Spritzschleppers in einer Wassermenge von 250 l/ha ausgebracht. Bei einer Aufwandmenge von 50 g/ha Cinidon-ethyl ergaben sich die in Tabelle 2 aufgeführten prozentualen vernichtungsraten bei verschiedenen Unkräutern.

**Tabelle 2**

| Unkraut | Formulierung gemäß Herstellbeispiel 1 | Formulierung gemäß Herstellbeispiel 2 |
|---|---|---|
| Galium aparine | 100 | 13 |
| Papaver rhoeas | 47 | 0 |
| Veronica hederaefolia | 76 | 0 |
| Stelaria media | 47 | 0 |

Bei einer Aufwandmenge von 100 g Cinidon-Ethyl pro ha ergaben sich die in Tabelle 3 zusammengestellten Werte:

**Tabelle 3**

| Unkraut | Formulierung gemäß Herstellbeispiel 1 | Formulierung gemäß Herstellbeispiel 2 |
|---|---|---|
| Galium aparine | 96 | 76 |
| Papaver rhoeas | 71 | 38 |
| Veronica hederaefolia | 81 | 47 |
| Stelaria media | 72 | 37 |

Aus den vorstehenden Versuchen geht hervor, daß die erfindungsgemäße flüssige Formulierung gemäß Herstellbeispiel 1 wesentlich aktiver ist gegen unerwünschten Pflanzenwuchs als das Spritzpulver gemäß Herstellbeispiel 2.

### Stabilitätsuntersuchung

Einer Formulierung aus 200 g/l Cinidon-Ethyl und 100 g/l Emulgatorgemisch (aus 40 g/l Wettol® EM 1 und 60 g/l Wettol® EM 31) in Solvesso® 200 wurden unterschiedliche Mengen N-Propylamin bzw. Essigsäure zugesetzt, und der Gehalt des Pflanzenschutz-Wirkstoffs wurde nach 6 bzw. 30 Tagen bestimmt (Anfangsgehalt: 100%). Die Ergebnisse sind Tabelle 4 zu entnehmen ("n.d." = nicht detektierbar).

**Tabelle 4**

| Zusatz | pH | Wirkstoffgehalt nach ..... [%] | |
|---|---|---|---|
| | | 6 Tagen | 30 Tagen |
| 20 g/l N-Propylamin | 7,5 | 37 | n.d. |
| 5 g/l N-Propylamin | 7,2 | 85 | n.d. |
| 0,3 g/l N-Propylamin | 6,6 | 100 | 100 |
| kein Zusatz | 5.2 | 100 | 100 |
| 20 g/l Essigsäure | 4,4 | 100 | 100 |

Es wird deutlich, daß schon geringe Mengen der Base N-Propylamin die Stabilität des Cinidon-ethyl herabsetzen, wohingegen Säuren wie Essigsäure keine derartige Wirkung haben.

## Patentansprüche

1. Flüssige Formulierung von Ethyl-(Z)-2-chlor-3-[2-chlor-5-(1,3-dioxo-4,5,6,7-tetrahydroisoindol-2-yl)phenyl]-acrylat, enthaltend im wesentlichen neben diesem Pflanzenschutz-Wirkstoff
a) einen ionischen Emulgator,
b) einen nicht-ionischen Emulgator,
c) ein nicht-nucleophiles und nicht-basisches aromatisches Lösungsmittel und
d) gewünschtenfalls einen weiteren herbiziden Pflanzenschutz-Wirkstoff.

2. Formulierung nach Anspruch 1, welche als ionischen Emulgator das Salz einer Alkylbenzolsulfonsäure enthält.

3. Formulierung nach Anspruch 1 oder 2, welche als nicht-ionischen Emulgator eine ethoxylierte oder propoxylierte natürlich vorkommende Carbonsäure oder einen ethoxylierten oder propoxylierten natürlich vorkommenden Alkohol enthält.

4. Formulierung nach den Ansprüchen 1 bis 3, welche als weiteren herbiziden Pflanzenschutz-Wirkstoff einen oder mehrere Pflanzenschutz-Wirkstoffe aus folgender Gruppe enthält: Aryloxyalkancarbonsäuren, Dinitroaniline, Wirkstoffe vom Cyclohexenontyp.

5. Verfahren zur Bekämpfung von unerwünschtem Pflanzenwuchs, **dadurch gekennzeichnet, daß** man eine Formulierung gemäß einem der Ansprüche 1 bis 4 auf die Kulturpflanzen, deren Lebensraum und/oder deren Saatgut einwirken läßt.

## Claims

1. A liquid formulation of ethyl (Z)-2-chloro-3-[2-chloro-5-(1,3-dioxo-4,5,6,7-tetrahydroisoindol-2-yl)phenyl]-acrylate comprising, essentially, in addition to the above crop protection agent,
a) an ionic emulsifier,
b) a non-ionic emulsifer,
c) a non-nucleophilic and non-basic aromatic solvent and,
d) if desired, a further herbicidal crop protection agent.

2. A formulation as claimed in claim 1 which comprises, as ionic emulsifier, the salt of an alkylbenzenesulfonic acid.

3. A formulation as claimed in claim 1 or 2 which comprises, as non-ionic emulsifier, an ethoxylated or propoxylated naturally occurring carboxylic acid or an ethoxylated or propoxylated naturally occurring alcohol.

4. A formulation as claimed in any of claims 1 to 3 which comprises as further herbicidal crop protection agent one or more crop protection agnts selected from the following group: aryloxyalkanecarboxylic acids, dinitroanilines, active ingredients of the cyclohexenone type.

5. A method of controlling undesirable vegetation, which comprises allowing a formulation as claimed in any of claims 1 to 4 to act on crop plants, their environment and/or their seed.

## Revendications

1. Formulation liquide d'éthyl-(Z)-2-chloro-3-[2-chloro-5-(1,3-dioxo-4,5,6,7-tétrahydroisoindole-2-yl)-phényl]-acrylate, contenant essentiellement, outre cette substance active pour la protection des plantes
a) un émulsifiant ionique,
b) un émulsifiant non-ionique,
c) un solvant aromatique non-nucléophile et non-basique et
d) éventuellement une autre substance active pour la protection des plantes.

2. Formulation selon la revendication 1, qui contient comme émulsifiant ionique le sel d'un acide alkylbenzènesulfonique.

3. Formulation selon la revendication 1 ou 2, qui contient comme émulsifiant non-ionique un acide carboxylique naturel éthoxylé ou propoxylé ou un alcool naturel éthoxylé ou propoxylé.

4. Formulation selon les revendications 1 à 3, qui contient comme autre substance à activité herbicide pour la protection des plantes une ou plusieurs substances à activité phytosanitaire choisies dans le groupe suivant: acides aryloxyalcane-carboxyliques, dinitroanilines, substances actives du type cyclohexanone.

5. Procédé pour la lutte contre la croissance indésirable des plantes, **caractérisé par le fait qu'**on fait agir une formulation selon l'une des revendications 1 à 4 sur les plantes cultivées, leur biotope et/ou leurs semences.
